# EUROPÄISCHE PATENTSCHRIFT

(11) **EP 0 974 789 B1**
(45) Veröffentlichungstag und Bekanntmachung des Hinweises auf die Patenterteilung: **06.05.2004**
(21) Anmeldenummer: 98810708.2
(22) Anmeldetag: 22.07.1998
(51) Int. Cl.: F23R 3/34, F23R 3/26, F02C 3/30, F02C 7/232, F02C 7/228, F02C 9/28

(54) **Verfahren zum Betrieb einer Gasturbinenbrennkammer mit flüssigem Brennstoff**
Method of operating the combustion chamber of a liquid-fuel gas turbine
Procédé de fonctionnement d'une chambre de combustion de turbine à gaz à carburant liquide

(43) Veröffentlichungstag der Anmeldung: 26.01.2000
(73) Patentinhaber: ALSTOM Technology Ltd, 5400 Baden (CH)
(72) Erfinder: Küenzi, Thomas, 4127 Birsfelden (CH); Müller, Gerhard, 82110 Germering (DE); Schiessel, Pirmin, 5424 Unterehrendingen (CH); Tschirren, Stefan, 4208 Nunningen (CH)

(56) Entgegenhaltungen:
- US-A- 4 027 473
- US-A- 4 903 478
- US-A- 5 289 685
- US-A- 5 339 635
- US-A- 5 402 634
- US-A- 5 729 968

## Beschreibung

### TECHNISCHES GEBIET

Die vorliegende Erfindung bezieht sich auf das Gebiet der Gasturbinen. Sie betrifft ein Verfahren zum Betrieb einer Gasturbine bei welcher in einer Brennkammer ein flüssiger Brennstoff verbrannt und die dabei entstehenden heissen Verbrennungsgase durch die Gasturbine geleitet werden, und bei welchem Verfahren der flüssige Brennstoff der Brennkammer über eine Mehrzahl von parallel arbeitenden, steuerbaren Brennern zugeführt und in die Brennkammer über Brennstoffdüsen eingedüst wird.

### STAND DER TECHNIK

Gasturbinen werden zunehmend mit Mehrfachbrennern mit magerer Vormischtechnik ausgerüstet. Dabei werden der Brennstoff und die Verbrennungsluft möglichst gleichmässig vorgemischt und erst dann der Flamme zugeführt. Wird dies mit einem hohen Luftüberschuss vollzogen, so entstehen relativ niedrige Flammentemperaturen und damit eine geringe Bildung von Stickoxiden. Zur Erreichung optimaler Emissionswerte kann zudem die lokale Flammentemperatur über das Einspritzen von Wasser erniedrigt werden. Die effektiven Stickoxidwerte verhalten sich dabei erfahrungsgemäss exponentiell zur Wassermenge.

Entsprechend der Geometrie von Gasturbinen wird die Mehrzahl von Brennern häufig ringförmig in Form einer Ringbrennkammer angeordnet. Solche Gasturbinen-Ringbrennkammern sind beispielsweise bekannt aus der EP 0597137 und EP 0597138. Die flüssigen Brennstoffe werden dabei den in mehrfachen Ringen angeordneten Brennern über Brennstoffzufuhrringe zugeführt, wo sie in die Ringbrennkammer eingedüst und verbrannt werden. Ebenso wird die Wasserzufuhr zu den Brennern über Wasserringe gewährleistet, die neben den Brennstoffzufuhrringen angeordnet sind.

Wird eine Gasturbine der eingangs genannten Art vom Stillstand in den Leerlaufbetrieb oder vom Leerlaufbetrieb in den Lastbetrieb hochgefahren, so treten häufig unerwünschte Effekte auf. Unter anderem sind in gewissen Phasen des Hochfahrens und bei Teillastbetrieb zum einen starke Rauch- und Stickoxidentwicklung möglich und zum anderen können unvorteilhafte Instabilitäten in der Gasturbinenbrennkammer auftreten.

Um sowohl beim Hochfahren wie auch im Teillastbetrieb der Gasturbine eine schadstoffarme Fahrweise zu ermöglichen, ist es beispielsweise aus US 5339635 bekannt, die Brenner in eine Anzahl von Gruppen einzuteilen und diese Gruppen in Abhängigkeit vom Lastzustand unabhängig voneinander anzusteuern. Auf diese Weise können die Bedingungen in der Brennkammer optimal an den Betriebszustand der Gasturbine angepasst werden, was Hochfahren und Teillastbetrieb unter kontrollierten Verbrennungs- und Strömungsbedingungen der Gasturbine ermöglicht. Hierbei tritt jedoch der Nachteil auf, dass Brennstoffreste in den Brennstoffleitungen der inaktiven Gruppen explosive Gemische bilden können und dass zumindest in brennernahen Bereichen darüber hinaus die Gefahr der Bildung von Verkokungsrückständen besteht.

US-A-5 729 968 offenbart eine Gasturbinenbrennkammer mit Wassereinspritzung.

### DARSTELLUNG DER ERFINDUNG

Der Erfindung liegt demnach die Aufgabe zugrunde, ein Verfahren anzugeben, mit welchem die Bildung explosiver Gemische und/oder von Verkokungsrückständen in den Brennstoffleitungen inaktiver Gruppen von Brennern vermieden wird.

Die Aufgabe wird bei einem Verfahren der eingangs genannten Art dadurch gelöst, dass brennernahe Abschnitte der Brennstoffleitungen von inaktiven Gruppen bis zu Steuerventilen mit inertem Brennstoffzusatz geflutet werden, und dass die mit inertem Brennstoffzusatz gefluteten brennemahen Abschnitte der Brennstoffleitungen von inaktiven Gruppen vor der Aktivierung dieser Gruppen vollständig durch Öffnen von Steuerventilen mit Brennstoff geflutet werden, wobei der inerte Brennstoffzusatz über Belüftungsventile in Leckageöltanks abgeführt wird. Durch den ersten Schritt, in dem der Brennstoff in den brennernahen Brennstoffleitungsabschnitten durch inerten Brennstoffzusatz ersetzt wird, wird verhindert, dass der explosive, ein potentielles Sicherheitsrisiko darstellende Brennstoff in den brennkammernahen Brennstoffleitungen von inaktiven Gruppen verbleibt. Sollen inaktive Gruppen wieder zugeschaltet werden, so erlaubt der zweite Schritt die Flutung der brennemahen Brennstoffleitungen mit Brennstoff, so dass die zu aktivierenden Gruppen sofort nach dem Zuschalten voll verfügbar sind. Der Zuschaltvorgang ist durch dieses Verfahren sicher und unterbruchsfrei gewährleistet.

Nach einer bevorzugten Ausführungsform des erfindungsgemässen Verfahrens wird als inerter Brennstoffzusatz Wasser eingesetzt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: Schematische Darstellung von Wassersystem, Brennstoffsystem und Brenner.
- Fig. 2: Schematische Darstellung der Ringbrennkammer in Ansicht gegen die Gasflussrichtung. Die Sektoreinteilung in sechs Sektoren ist mit radialen Geraden angedeutet.
- Fig. 3: Schematische Darstellung der Ringbrennkammer in Ansicht gegen die Gasflussrichtung. Nur die Brenner des ersten Brennerrings sind dargestellt.
- Fig. 4: Schematische Darstellung der Ringbrennkammer in Ansicht gegen die Gasflussrichtung. Nur die Brenner des zweiten Brennerrings sind dargestellt.
- Fig. 5: Schematische Darstellung der Ringbrennkammer in Ansicht gegen die Gasflussrichtung. Nur die Brenner des dritten Brennerrings sind dargestellt.
- Fig. 6: Anzahl der aktiven Brenner in den Fahrbereichen des Hochfahrens der Gasturbine vom Stillstand in den Leerlaufbetrieb.
- Fig. 7: Darstellung der relativen Ölverteilung auf die drei Brennerringe in Prozenten (Ordinate) als Funktion der an der Gasturbine angelegten Last (Abszisse) in Prozenten relativ zur Vollast. Betrieb unter Verwendung von Wasser als Brennstoffzusatz.
- Fig. 8: Darstellung des Brennstoff-Luft Verhältnisses Φ (Ordinate) als Funktion von der relativ zur Vollast bemessenen, an der Gasturbine anliegenden Last (Abszisse). Betrieb unter Verwendung von Wasser als Brennstoffzusatz.
- Fig. 9: Darstellung des Wasser zu Brennstoff-Verhältnisses Ω (Ordinate) als Funktion von der relativ zur Vollast bemessenen, an der Gasturbine anliegenden Last (Abszisse).
- Fig. 10: Darstellung der relativen Ölverteilung auf die drei Brennerringe in Prozenten (Ordinate) als Funktion der an der Gasturbine angelegten Last (Abszisse) in Prozenten relativ zur Vollast. Betrieb ohne Verwendung von Wasser als Brennstoffzusatz.
- Fig. 11: Darstellung des Brennstoff-Luft Verhältnisses Φ (Ordinate) als Funktion von der relativ zur Vollast bemessenen, an der Gasturbine anliegenden Last (Abszisse). Betrieb ohne Verwendung von Wasser als Brennstoffzusatz

### WEGE ZUR AUSFÜHRUNG DER ERFINDUNG

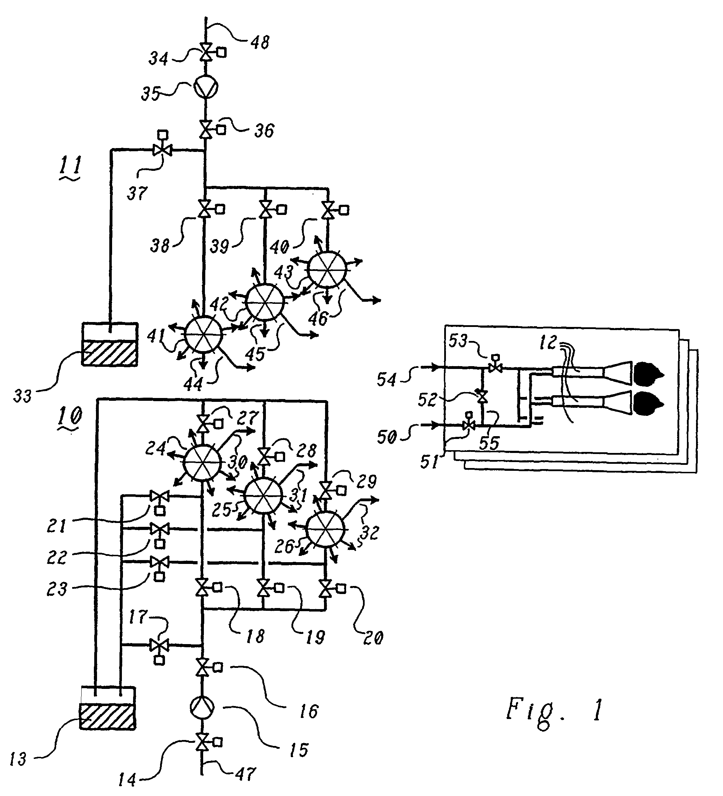

Figur 1 gibt eine schematische Darstellung von Brennstoffsystem 10, Wassersystem 11 und Brenner 12 eines Ausführungsbeispiels. Die Brenner 12 sind dabei in drei einzeln ansteuerbare Ringe 70-72 unterteilt, die von drei unabhängigen Brennstoffzufuhrringen 24-26 mit Brennstoff versorgt werden und von drei ebenfalls unabhängigen Wasserringen 41-43 mit Wasser versorgt werden. Die Brennstoffzufuhr aller Brenner über die Brennstoff-Zubringerleitung 47 ist über ein direkt hinter einer Brennstoffpumpe 15 liegendes Brennstoff-Schnellabschaltventil 16 zentral geregelt. Nach dem Brennstoff-Schnellabschaltventil 16 verzweigt sich die Brennstoffleitung in drei Leitungen, die die drei Brennstoffzufuhrringe 24-26 versorgen und mittels Steuerventilen 18-20 einzeln geregelt werden. Zwischen den Brennstoff-Steuerventilen 18-20 und den Brennstoffzufuhrringen 24-26 befindet sich zudem noch jeweils eine Abzweigung der Brennstoffleitungen in einen Leckageöltank 13, welche Abzweigungen mittels Drainageventilen 21-23 geregelt sind und die Entleerung von in den Brennstoffzufuhrringen 24-26 enthaltenem Brennstoff erlauben. Die Brennstoffzufuhrringe 24-26 verfügen ihrerseits über zum Leckageöltank 13 führende, mit Belüftungsventilen 27-29 regelbare Leitungen, die die Entleerung von in den Brennstoffzufuhrringen 24-26 enthaltenem Wasser in den Leckageöltank 13 erlauben. Die Brennstoffzufuhrringe 24-26 sind weiterhin unterteilt in sechs Sektoren 61-66, die einzeln mit Brennstoffkreissektorauslässen 30-32 versorgt werden.

Die Wasserringe 41-43 werden über den Wassereinlass 48 versorgt und mit einem der Wasserpumpe 35 nachgeschalteten Wasser Schnellabschaltventil 36 zentral geregelt. Die Wasserleitung verzweigt sich nach dem Schnellabschaltventil 36 in drei Leitungen, die mit Steuerventile 38-40 unabhängig geregelt werden und zu den drei Wasserringen 41-43 führen. Wie die Brennstoffzufuhrringe 24-26 sind auch die Wasserringe 41-43 in jeweils sechs Sektoren 61-66 eingeteilt und die Brenner dieser Sektoren werden über Wasserringsektorauslässe 44-46 einzeln versorgt.

Ein solcher Sektor 61-66 eines Brennerrings 70-72 wird über einen Brennstoffsektoreinlass 50, der einer der Brennstoffzufuhrringsektorauslässe 30-32 ist, mit Brennstoff versorgt und über einen Wassersektoreinlass 54 , der einer der Wasserringsektorauslässe 44-46 ist, mit Wasser versorgt. Die Brennstoffzufuhr wird über ein Brennstoff Sektorventil 51 geregelt, die Wasserzufuhr über ein Wasser Sektorventil 53, bevor sich die Leitungen verzweigen und zu den im Sektor liegenden Brennern führen. Zwischen dem Brennstoffsektoreinlass 50 und dem Wassersektoreinlass 54 befindet sich zudem eine Verbindungsleitung 55, die mit einem Rückschlagventil 52 geregelt ist, und welche Verbindungsleitung 55 ein Fluten der Brennstoffzufuhrringe 24-26 mit Wasser erlaubt.

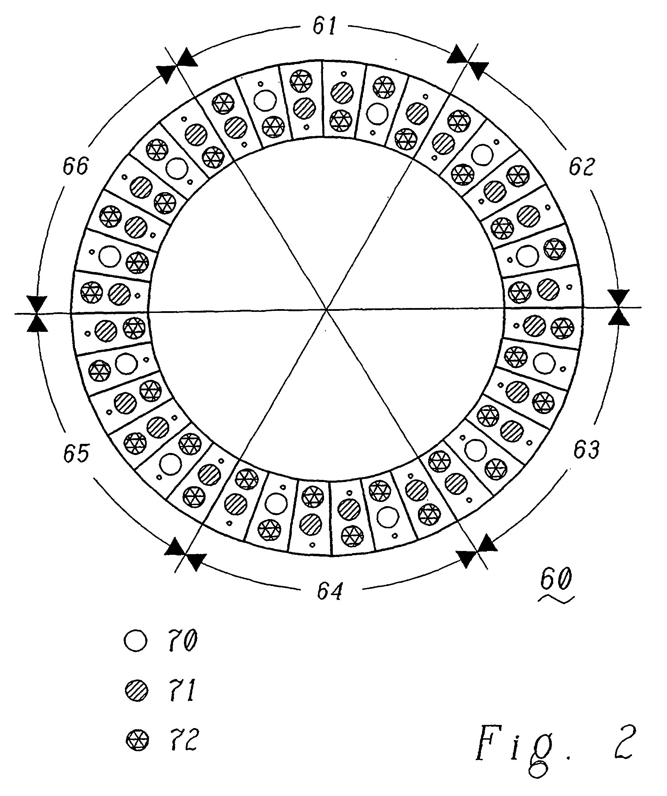

Figur 2 zeigt einen Schnitt durch die Ringbrennkammer mit den Brennerringen 60 entgegen der Gasflussrichtung. Die drei Gruppen 70-72 der 72 Brenner sind durch entsprechende Schraffuren gekennzeichnet. Leere Kreise bezeichnen die 12 Brenner des ersten Brennerrings 70, schräg schraffierte Kreise die 24 Brenner des zweiten Brennerrings 71, und dreieckgittergefüllte Kreise bezeichnen die 36 Brenner des dritten Brennerrings 72. Des weiteren ist die Sektoreinteilung in die sechs Sektoren 61-66 angegeben.

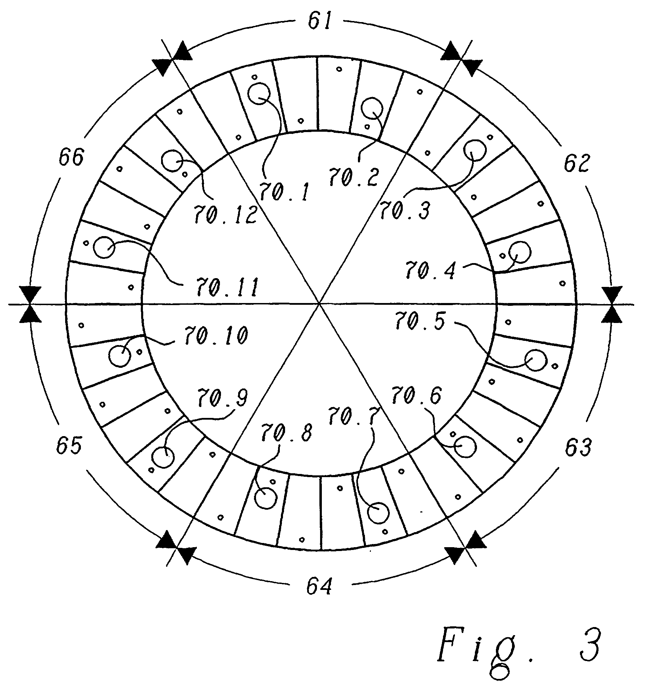

Figur 3 zeigt wiederum den Schnitt durch die Ringbrennkammer entgegen der Gasflussrichtung. Nur die 12 Brenner des ersten Brennerrings 70.1-70.12 sind angegeben und bezeichnet.

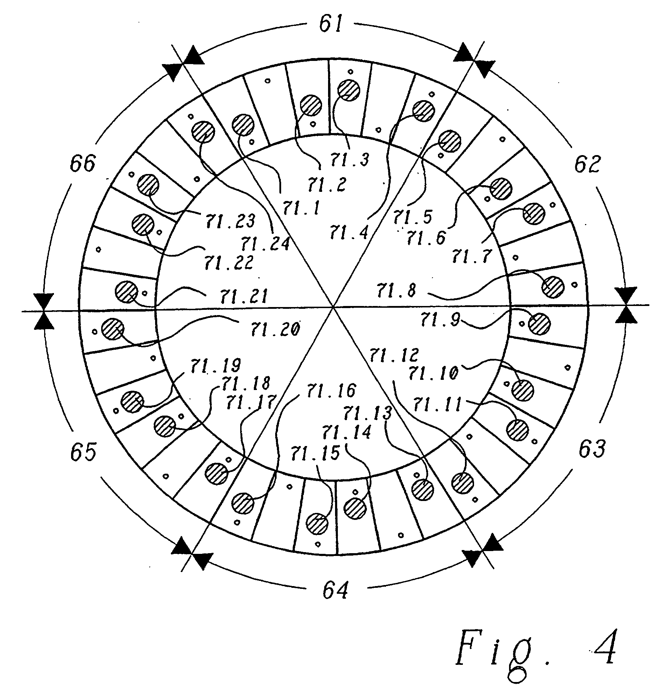

Figur 4 zeigt den Schnitt durch die Ringbrennkammer entgegen der Gasflussrichtung. Nur die 24 Brenner des zweiten Brennerrings 71.1-71.24 sind angegeben und bezeichnet.

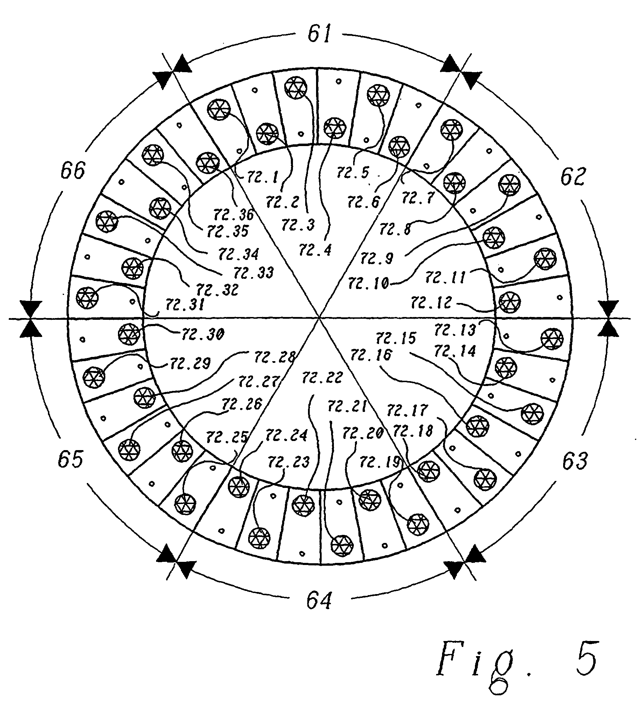

Figur 5 zeigt den Schnitt durch die Ringbrennkammer entgegen der Gasflussrichtung. Nur die 36 Brenner des dritten Brennerrings 72.1-72.36 sind angegeben und bezeichnet.

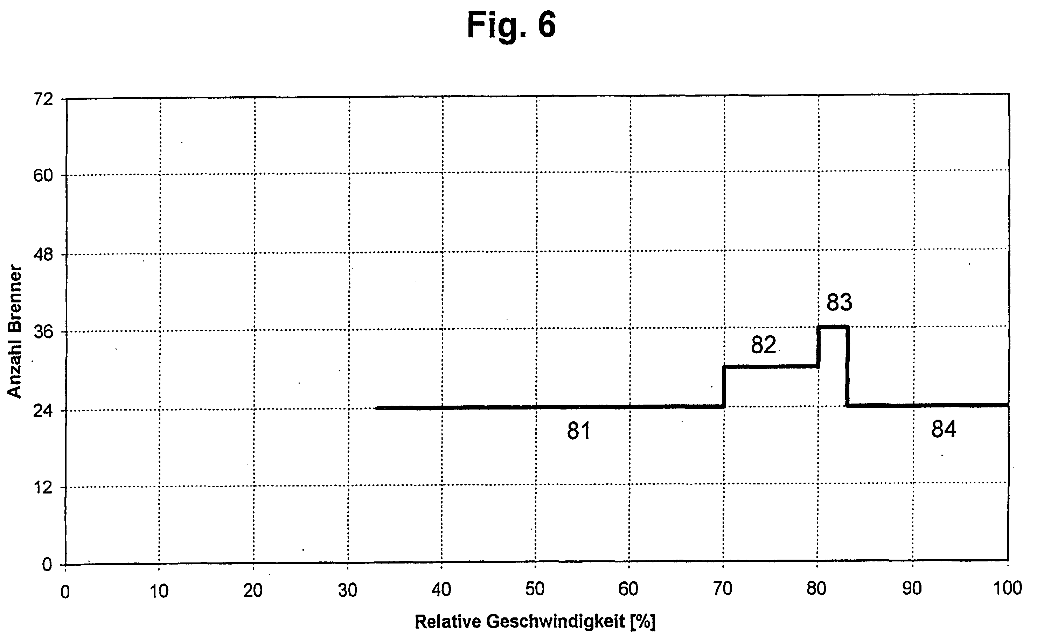

Figur 6 zeigt die Anzahl aktiver Brenner (Ordinate) beim Hochfahren der Gasturbine vom Stillstand in den Leerlauf als Funktion der relativen Geschwindigkeit ausgedrückt in % der Leerlaufgeschwindigkeit von 3000 min⁻¹ (Abszisse). Aus dem Stillstand wird die Gasturbine zunächst von aussen mit einem static starting device (SSD) auf ca. 950 min⁻¹ beschleunigt. Schon bei 850 min⁻¹ werden dabei die Steuerventile 18 und 19 vom ersten und zweiten Brennerring (24 und 25) mit einem Füllungsmassenfluss von 7.8 bzw. 16.0 kg/s geöffnet. Bei ca. 950 min⁻¹ wird das Brennstoff-Schnellabschaltventil 16 geöffnet und die Brennstoffleitungen der Brennerringe 24 und 25 werden gefüllt, wobei die Belüftungsventile 27 und 28 geöffnet sind. Die Sektorventile 51 sind bei diesem Füllen geschlossen. Dadurch ist die Brennkammer vom Brennstoff getrennt und die Sicherheit während des Füllens ist gewährleistet. Im Augenblick wo das Brennstoff-Schnellabschaltventil 16 geöffnet wird fällt der Druck hinter der Brennstoffpumpe 15 von ca. 100 bar auf ca. 77 bar. Zunächst ist der Druck in den Brennstoffzufuhrringen 24 und 25 niedrig, weil nur Luft durch die Belüftungsventile 27 und 28 fliesst. Sobald die Brennstoffleitungen der Brennstoffzufuhrringe 24 und 25 mit Brennstoff voll sind und Brennstoff durch die Belüftungsventile 27 und 28 zu fliessen beginnt, baut sich aber Druck auf, und sobald der Druck in den Leitungen 20 bar übersteigt sind die Leitungen voll und die Steuerventile des ersten und zweiten Brennstoffzufuhrringes beginnen zu schliessen. Der Gradient dieses Schliessvorgangs wird dabei derart gesteuert, dass der Massenfluss über einen PT1 für den ersten Ring auf 0.5s und für den zweiten Ring auf 1s geregelt wird.

Sobald der Massenfluss einen bestimmten, für die Zündung idealen Wert erreicht hat, werden beim ersten 70 und zweiten 71 Brennstoffzufuhrring die Sektorventile 51 der Sektoren 62, 63, 65 und 66 geöffnet und Brennstoff füllt die Leitungen zwischen den Sektorventilen 51 und der Brennkammer. Nachdem die Steuerventile 18 und 19 etwas weiter geschlossen worden sind (wiederum ist das Kriterium der Abstand zum Zündungsmassenfluss), werden auch die Belüftungsventile 27 und 28 geschlossen. In diesem Augenblick steigt der Druck in den Brennstoffzufuhrringen 24 und 25 schlagartig zu und die Zündung setzt ein. Es werden 24 Brenner 70.3-70.6, 70.9-70.12, 71.5-71.12, 71.17-71.24, nämlich die Brenner des ersten Brennerrings 70 ohne die zwei gegenüberliegenden Sektoren 61 und 64 gezündet. Die Zündung ist erfolgt bei 950 min⁻¹ und ist sehr sanft und gut kontrolliert.

Im Bereich 81 beschleunigen die 24 Brenner 70.3-70.6, 70.9-70.12, 71.5-71.12, 71.17-71.24 die Gasturbine auf 2000 min⁻¹. Bei 2000 min⁻¹ wird nun der Sektor 64 zugeschaltet wonach dann im zweiten Bereich 82 30 Brenner 70.3-70.12, 71.5-71.24 aktiv sind. Nach Erreichen von 2400 min⁻¹ wird dann auch noch der letzte Sektor 61 zugeschaltet, so dass im dritten Bereich 83 dann 36 Brenner 70.1-70.12, 71.1-71.24 für kurze Zeit aktiv sind. Bei ca. 2500 min⁻¹ nämlich wird die ganze erste Gruppe abgeschaltet und die Leitungen des ersten Brennstoffzufuhrringes werden mit Wasser geflutet. Dies wird dadurch erreicht, dass alle Wassersektorventile 53 des ersten Brennerrings 24 und das Steuerventil 18 geschlossen werden, das Drainageventil des ersten Brennerrings 21 geöffnet wird, und Wasser durch die Verbindungsleitung 55 durch das nunmehr geöffnete Rückschlagventil 52 in den ersten Brennerring 24 strömt, wobei der Brennstoff in den Leckageöltank 13 abgeführt wird. So sind oberhalb von ca. 2500 min⁻¹ 25 und beim Leerlaufbetrieb bei 3000 min⁻¹ alle 24 Brenner 71.1-71.24 des zweiten Brennerrings aktiv.

Diese komplizierte Führung des Hochfahrens und des Zündens ist aus folgenden Gründen notwendig:
- Wenn alle 36 Brenner des ersten und zweiten Rings 70 und 71 beim Zünden und Hochfahren immer aktiv sind, kommt es vor, dass beim Schliessen der Abblaseventile des Verdichters die Flammen ausgelöscht werden.
- Für gute Kreuzzündung zwischen den Brennern ist es notwendig, dass der innere Brennerkreis nicht unterbrochen ist, d.h. eine Zündung unter ausschliesslicher Verwendung des zweiten Rings 71 ist nicht möglich.
- Leerlaufbetrieb der Gasturbine mit den 36 Brennern des ersten und zweiten Brennerringes 70 und 71 führt zu starker Rauchbildung. Diese Rauchbildung wird durch das Ausschalten des ersten Brennerringes 70 bei 2500 min⁻¹ verhindert. Auch beim Wiederaktivieren des ersten Brennerrings 70 bei 10% relativer Last beim Hochfahren in den Lastbetrieb ist keine Rauchentwicklung sichtbar.

Zur Verhinderung Rauchbildung und zur Optimierung des Stickoxidausstosses wird der beigemischte Wasseranteil zwischen 950 min⁻¹ und 3000 min⁻¹ bevorzugt im Bereich Masse Wasser zu Masse Brennstoff von Ω = 0-0.3 eingestellt.

Das Verhalten der Gasturbine bei derartigem Hochfahren ist bei kalter wie bei heisser Gasturbine sehr gut.

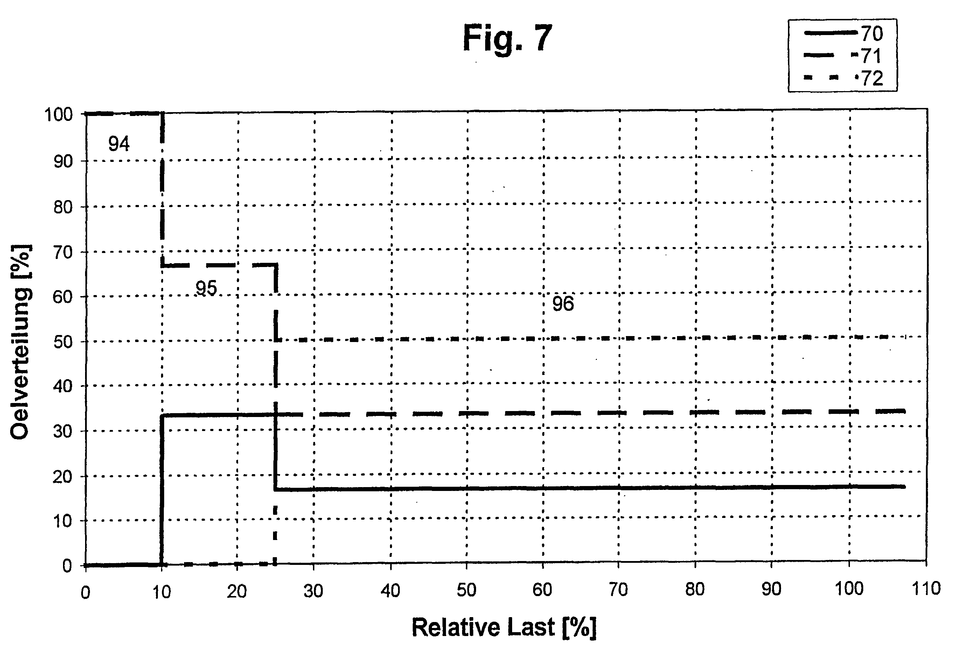

Figur 7 zeigt die relative Verteilung der Ölzufuhr auf die drei Brennerringe 70-72 (Ordinate) beim Hochfahren der Gasturbine vom Leerlaufbetrieb in den Lastbetrieb als Funktion der Last (Abszisse) relativ zur definierten Vollast (100%).

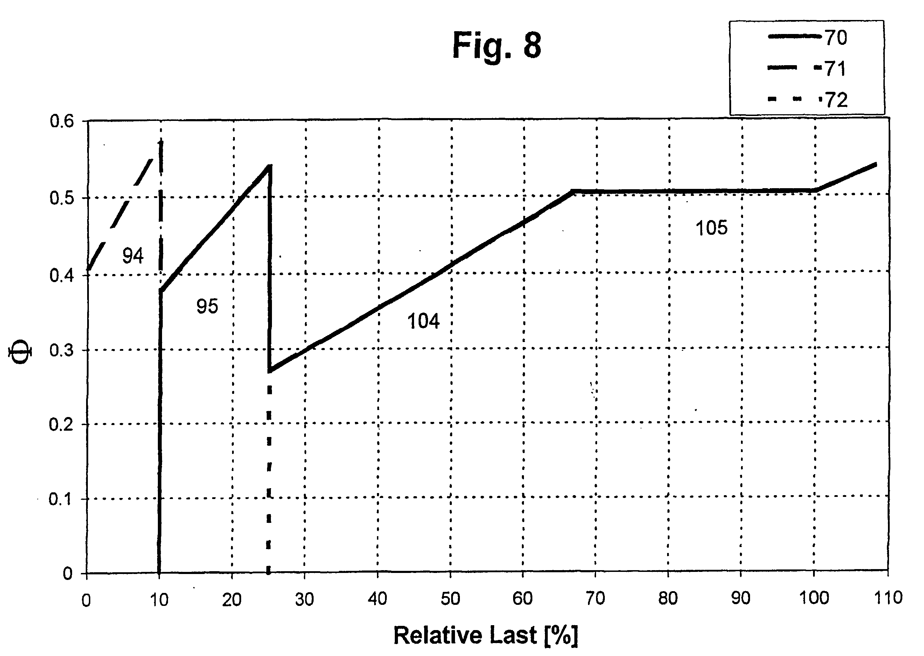

Figur 8 zeigt das Brennstoff-Luft Verhältnis Φ (Ordinate) als Funktion von der relativ zur Vollast bemessenen, an der Gasturbine anliegenden Last (Abszisse) in den verschiedenen Fahrbereichen, wobei die dargestellten Kurven für ein Wasser zu Brennstoff Verhältnis Ω von 0.9 gelten. In der ersten Phase 94 von 0-10% relativer Last ist nur der zweite Brennerring aktiv, wobei dieser kontinuierlich mehr Brennstoff erhält, so dass sich, das Brennstoff-Luft Verhältnis Φ immer mehr vergrössert. Bei 10% relativer Last wird dann innerhalb von 12s der erste Brennerring wieder zugeschaltet, wobei der Brennstoff homogen über alle Brenner verteilt wird. Der Brennstoffzufuhrring 24 des ersten Brennerrings 70 ist anfangs noch voller Wasser, da er beim Hochfahren in den Leerlauf bei 2500 min⁻¹ mit Wasser geflutet worden ist. Um Lastfluktuationen beim Wiedereinschalten des ersten Brennerrings 70 zu vermeiden, muss dieses Wasser vor der Reaktivierung wieder aus dem Leitungssystem entfernt werden. Dazu wird bei geschlossenen Sektorventilen 51 und geöffnetem Belüftungsventil 27 das Steuerventil des ersten Brennstoffzufuhrrings 18 geöffnet. Dadurch wird Brennstoff in das Leitungssystem hineingetrieben und das im Leitungssystem befindliche Wasser wird durch das Belüftungsventil 27 in den Leckageöltank 13 gespült. Nach Füllen der Leitungen wird der Massenfluss wieder auf Zündungsmenge reduziert, das Belüftungsventil 27 wird geschlossen und die Sektorventile 51 werden geöffnet. So wird das Leitungssystem zwischen Sektorventil 51 und Brennkammer mit Brennstoff gefüllt und wenn das ganze System voll ist, kann der erste Brennerring 70 schnell in Betrieb genommen werden. Beim Herunterfahren der Gasturbine wird der erste Brennerring ebenfalls bei 10% Last ausgeschaltet.

In der zweiten Phase 95 von 10-25% relativer Last werden nun der erste und der zweite Brennerring kontinuierlich zunehmend mit Brennstoff angesteuert, wie auch aus dem Fahrbereich 95 in Figur 8 ersichtlich ist. Bei 25% relativer Last wird der dritte Brennerring 72 zugeschaltet. Dies geschieht gleich wie die Zuschaltung des ersten Brennerrings 70 bei 10% relativer Last, nur ist beim Zuschalten des dritten Brennerrings 72 die Zuschaltzeit 30s. Oberhalb von 25% relativer Last in der Phase 96 sind dann somit alle 72 Brenner der Ringbrennkammer in Betrieb, und wiederum wird die Brennstoffzufuhr homogen auf allen Brennern kontinuierlich vergrössert.

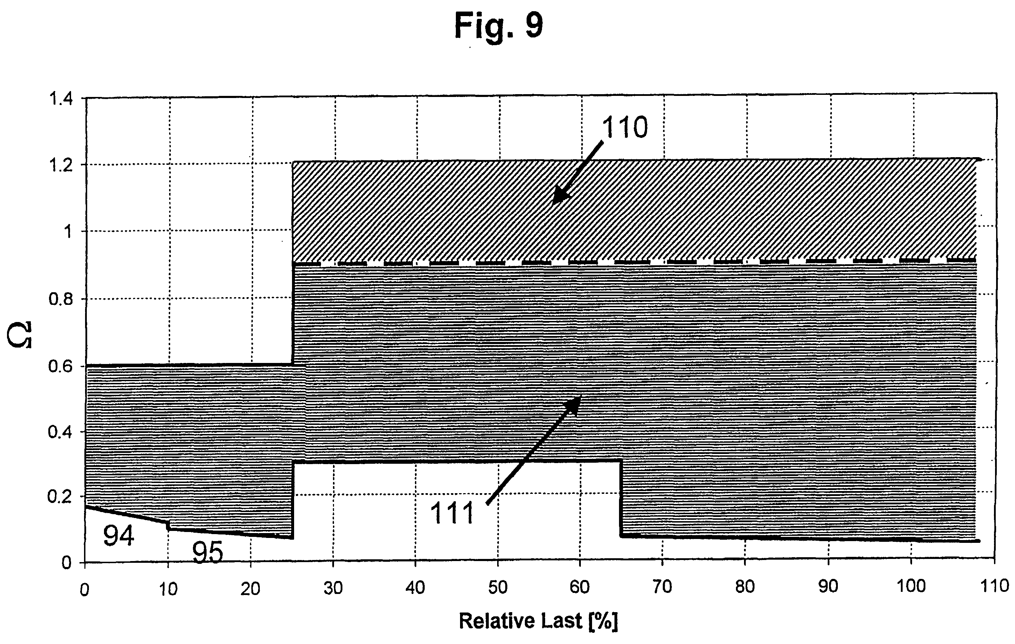

Das Hochfahren auf Vollast in der dritten Phase 96 ist nun sehr einfach, und keine Anzeichen von Pulsieren, Auslöschen oder Rauch können entdeckt werden, wenn als Brennstoffzusatz Wasser den Brennern zugeführt wird. Figur 9 zeigt das Wasser zu Brennstoff-Verhältnis Ω (Ordinate) als Funktion von der relativ zur Vollast bemessenen, an der Gasturbine anliegenden Last (Abszisse) in den verschiedenen Fahrbereichen. Wird das Verhältnis Ω, definiert als Verhältnis Masse Wasser zu Masse Brennstoff, im horizontal schraffierten Bereich 111 der Figur 9 gehalten, so ist das Verhalten der Gasturbine absolut sicher, und ohne dass Rauchentwicklung sichtbar ist. Der konkret gewählte Wert für Ω kann entsprechend den Stickoxidausstossvorschriften gewählt werden. Wählt man Ω kleiner als im Bereich 111 angegeben, so beobachtet man ein Pulsieren der Gasturbine, wählt man Ω grösser als den Bereich 111, so ist eine starke Rauchbildung zu beobachten. Im schräg schraffierten Bereich 110 ist der Betrieb unter Rauchbildung noch möglich, während oberhalb dieses Bereiches 110 der Betrieb nicht mehr möglich ist.

Beim Herunterfahren der Gasturbine erweist es sich als vorteilhaft, den dritten Brennerring 72 erst bei 24.5% relativer Last auszuschalten.

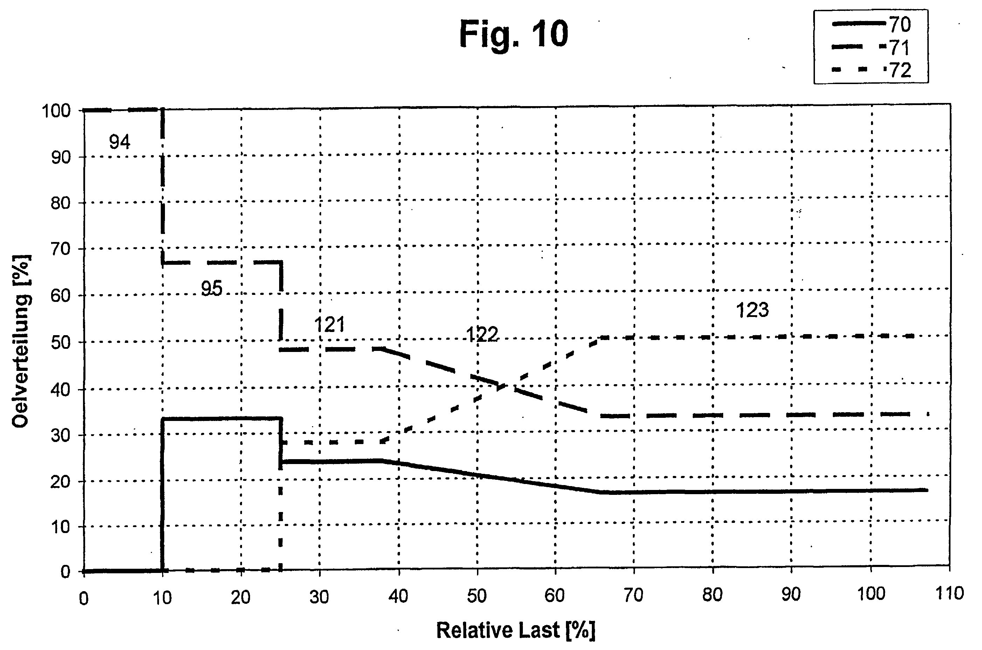

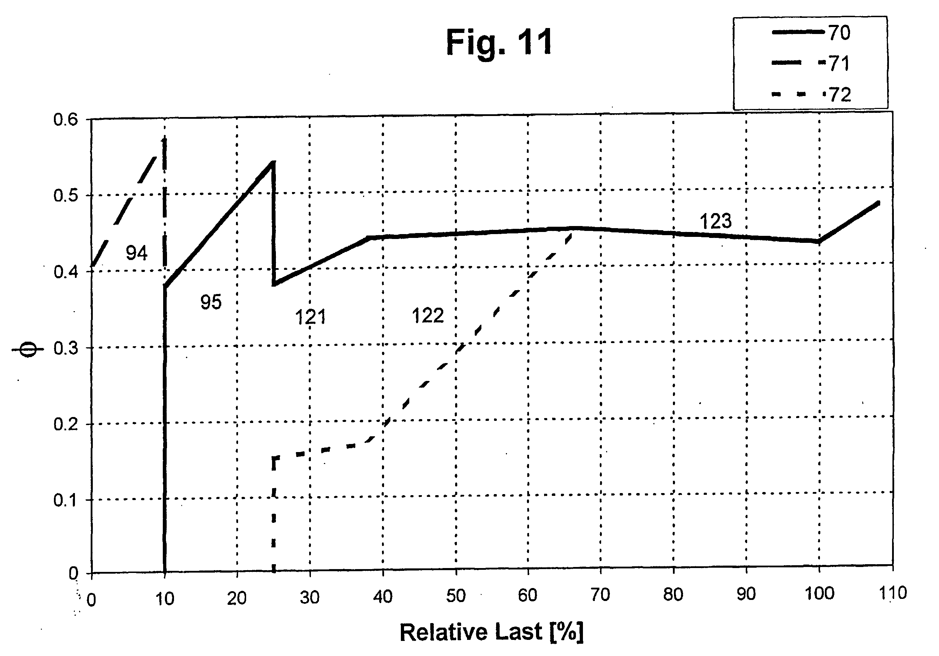

Soll die Gasturbine ohne Wasser betrieben werden, so muss oberhalb 25% relativer Last anders verfahren werden. Der dritte Brennerring 72 wird dabei zugeschaltet und angesteuert wie aus den Figuren 10 und 11 ersichtlich. Der dritte Brennerring 72 erhält beim Zuschalten weniger Brennstoff als der zweite 71 und der erste 70 Ring (Phase 121). Bei ca. 38% beginnend bis ca. 66% relativer Last (Phase 122) wird dann diese Inhomogenität der Brennstoffversorgung kontinuierlich ausgeglichen, und in der vierten Phase 123 stellt man die gleichen Verhältnisse wie beim Wasser verwendenden Verfahren ein. Auf diese Weise kann ein Pulsieren der Gasturbine effizient vermieden werden. Es empfiehlt sich aber auf jeden Fall, in den Phasen, wo nicht alle Brenner in Betrieb sind (Phasen 94 und 95), die unbenutzten Brenner mit einer minimalen Menge von Wasser zu spülen, um mögliches Leckageöl der eigentlich geschlossenen Steuerventile in kontrollierter Weise in den Brennraum zu befördern und damit ein verkoken von einzelnen Brennerlanzen zu verhindern.

Vorteile der oben beschriebenen Vorgehensweise sind somit zusammenfassend:
- Es handelt sich um ein einfaches, sicheres Fahrkonzept
- Hohe Verfügbarkeit durch kontrolliertes Hochfahren
- Optimale Stickoxid und Rauchemissionen insbesondere im Teillastbereich und in der Anfahrphase.

### BEZEICHNUNGSLISTE

- 10: Brennstoffsystem
- 11: Wassersystem
- 12: Brenner
- 13: Leckageöltank
- 14: Brennstoff-Hauptabschaltventil
- 15: Brennstoffpumpe
- 16: Brennstoff-Schnellabschaltventil
- 17: Brennstoff-Entspannungsventil
- 18,19,20: Steuerventile erster, zweiter und dritter Brennstoffzufuhrring
- 21,22,23: Drainageventile erster, zweiter und dritter Brennstoffzufuhrring
- 24,25,26: erster, zweiter und dritter Brennstoffzufuhrring
- 27,28,29: Belüftungsventile erster, zweiter, und dritter Brennstoffzufuhrring
- 30,31,32: Brennstoffzufuhrringsektorauslässe
- 33: Leckagewassertank
- 34: Wasser Hauptabschaltventil
- 35: Wasserpumpe
- 36: Wasser Schnellabschaltventil
- 37: Wasser Entspannungsventil
- 38,39,40: Steuerventile erster, zweiter und dritter Wasserring
- 41,42,43: erster, zweiter, und dritter Wasserring
- 44,45,46: Wasserringsektorauslässe
- 47: Brennstoff Zubringerleitung
- 48: Wassereinlass
- 50: Brennstoffsektoreinlass
- 51: Brennstoff Sektorventil
- 52: Rückschlagventil
- 53: Wasser Sektorventil
- 54: Wassersektoreinlass
- 55: Verbindungsleitung
- 60: Brennerringe
- 61-66: Sektoren 1 bis 6 der Brennerringe
- 70.1-70.12: Brenner des ersten Brennerrings
- 71.1-71.24: Brenner des zweiten Brennerrings
- 72.1-72.36: Brenner des dritten Brennerrings
- 81: Brenner des ersten und zweiten Brennerrings aktiv ohne die Sektoren 61 und 64
- 82: Brenner des ersten und zweiten Brennerrings aktiv ohne Sektor 61
- 83: Brenner des ersten und zweiten Brennerrings aktiv
- 84: Brenner des zweiten Brennerrings aktiv
- 94: Brenner des zweiten Brennerrings aktiv
- 95: Brenner des ersten und zweiten Brennerrings aktiv
- 96: Brenner aller Brennerringe aktiv
- 104: Brenner aller Brennerringe aktiv, die Brennstoffzufuhr kontinuierlich zunehmend
- 105: Brenner aller Brennerringe aktiv, die Brennstoffzufuhr stabil
- 110: Bereich, in dem mit Rauchentwicklung zu rechnen ist
- 111: Bereich in dem Ω frei variiert werden kann.
- 121: Bereich, in dem die drei Ringe inhomogen angesteuert werden
- 122: Bereich, in dem die Inhomogenität der Ansteuerung ausgeglichen wird
- 123: Bereich, in dem die drei Ringe homogen angesteuert werden

## Patentansprüche

1. Verfahren zum Betrieb einer Gasturbine, bei welcher in einer Brennkammer ein flüssiger Brennstoff verbrannt und die dabei entstehenden heissen Verbrennungsgase durch die Gasturbine geleitet werden, und bei welchem Verfahren der flüssige Brennstoff der Brennkammer über eine Mehrzahl von parallel arbeitenden, steuerbaren Brennern (12) zugeführt und in die Brennkammer über Brennstoffdüsen eingedüst wird, und die Brenner (12) in wenigstens zwei Gruppen (61-66,70-72) von Brennern (12) eingeteilt sind, und diese Gruppen in Abhängigkeit des Betriebszustands der Gasturbine einzeln angesteuert werden, wobei die Brenner (12) mittels Brennstoffleitungen (50) mit Brennstoff und mittels Brennstoffzusatzteitungen (54) mit inertem Brennstoffzusatz versorgt werden und sowohl die Brennstoffleitungen (50) als auch die Brennstoffzusatzleitungen (54) gruppenweise einzeln angesteuert werden, **dadurch gekennzeichnet, dass** brennemahe Abschnitte der Brennstoffleitungen (50) von inaktiven Gruppen bis zu Steuerventilen (18-20) mit inertem Brennstoffzusatz geflutet werden, und dass die mit inertem Brennstoffzusatz gefluteten brennernahen Abschnitte der Brennstoffleitungen (50) von inaktiven Gruppen vor der Aktivierung dieser Gruppen vollständig durch Öffnen von Steuerventilen (18-20) mit Brennstoff geflutet werden, wobei der inerte Brennstoffzusatz über Belüftungsventile (27-29) in Leckageöltanks (13) abgeführt wird.

2. Verfahren nach Anspruch 1, **dadurch gekennzeichnet, dass** als inerter Brennstoffzusatz Wasser eingesetzt wird.

## Claims

1. Method of operating a gas turbine in which a liquid fuel is burned in a combustion chamber and the hot combustion gases produced in the process are directed through the gas turbine, and in which method the liquid fuel is fed to the combustion chamber via a plurality of controllable burners (12) working in parallel and is sprayed into the combustion chamber via fuel nozzles, and the burners (12) are divided into at least two groups (61-66, 70-72) of burners (12), and these groups are individually activated as a function of the operating state of the gas turbine, the burners (12) being supplied with fuel by means of fuel lines (50) and with an inert fuel supplement by means of fuel-supplement lines (54), and both the fuel lines (50) and the fuel-supplement lines (54) being activated individually in groups, **characterized in that** sections of the fuel lines (50) of inactive groups which are close to the burners are flooded as far as the control valves (18-20) with an inert fuel supplement, and **in that** those sections of the fuel lines (50) of inactive groups which are close to the burners and flooded with an inert fuel supplement are completely flooded with fuel before the activation of these groups by opening control valves (18-20), the inert fuel supplement being discharged into leakage oil tanks (13) via ventilation valves (27-29).

2. Method according to Claim 1, **characterized in that** the inert fuel supplement used is water.

## Revendications

1. Procédé de fonctionnement d'une turbine à gaz, dans laquelle un combustible liquide est brûlé dans une chambre de combustion et les gaz de combustion chauds produits sont conduits à travers la turbine à gaz, et dans lequel procédé le combustible liquide est acheminé à la chambre de combustion par le biais d'une pluralité de brûleurs (12) commandables, fonctionnant en parallèle, et est injecté dans la chambre de combustion par le biais d'injecteurs de combustible, et les brûleurs (12) sont divisés en au moins deux groupes (61-66, 70-72) de brûleurs (12), et ces groupes sont commandés individuellement en fonction de l'état de fonctionnement de la turbine à gaz, les brûleurs (12) étant alimentés au moyen de conduites de combustible (50) en combustible et au moyen de conduites supplémentaires de combustible (54) en supplément de combustible inerte, et à la fois les conduites de combustible (50) et les conduites supplémentaires de combustible (54) étant commandées individuellement par groupe, **caractérisé en ce que** des portions proches des brûleurs des conduites de combustible (50) de groupes inactifs sont remplies de supplément de combustible inerte jusqu'aux soupapes de commande (18-20), et **en ce que** les portions proches des brûleurs des conduites de combustible (50) de groupes inactifs remplies de supplément de combustible inerte sont complètement remplies de combustible avant l'activation de ces groupes par l'ouverture des soupapes de commande (18-20), le supplément de combustible inerte étant évacué dans le réservoir d'huile de fuite (13) par le biais de soupapes d'aération (27-29).

2. Procédé selon la revendication 1, **caractérisé en ce que** l'on utilise de l'eau comme supplément de combustible inerte.
